# DEMANDE DE BREVET EUROPEEN

(11) **EP 2 048 611 A1**
(43) Date de publication de la demande: **15.04.2009**
(21) Numéro de dépôt: 07301461.5
(22) Date de dépôt: 12.10.2007
(51) Int. Cl.: G06Q 30/00

(54) **Dispositif et procédés de téléchargement et/ou de diffusion de publicités ciblées à l'aide d'un dispositif électronique portable**

(71) Demandeur: GEMPLUS, 13420 Gémenos (FR)
(72) Inventeur: Vandewalle, Jean-Jacques, 59260 Lille-Hellemmes (FR)

(57) **Abrégé**

L'invention concerne un dispositif et des procédés de diffusion personnalisée de publicités ciblées depuis un serveur local. L'invention porte en particulier sur un serveur de publicité embarqué dans un dispositif électronique, et les procédés de diffusion et de mise à jour nécessaire à son fonctionnement.

L'impact de la publicité diffusée selon l'invention est optimisé car les contenus publicitaires présentés au public correspondent aux attentes ou centres d'intérêt de chaque individu. L'âge, le sexe, la localisation géographique, sont autant d'exemples de critères exploités selon l'invention.

## Description

L'invention concerne un dispositif et des procédés de diffusion personnalisée de publicités ciblées depuis un serveur local.

L'invention porte en particulier sur un serveur de publicité embarqué dans un dispositif électronique, et les procédés de diffusion et de mise à jour nécessaires à son fonctionnement.

Afin de diffuser de la publicité sur un dispositif électronique, deux philosophies existent à ce jour :
- Selon une première possibilité, la publicité est fixe. Nous sommes dans le cas où les encarts publicitaires sont insérés une fois pour toutes dans leurs supports lors de la création de ceux-ci. Cette solution est par exemple utilisée pour associer de la publicité à l'utilisation de certains logiciels. Lors du lancement du logiciel en question, pendant le chargement une image publicitaire apparaît quelques secondes.

Cette solution a de nombreux inconvénients, entre autre sa trop grande rigidité. En effet, si un utilisateur se sert pendant 5 ans de ce logiciel, il est très peu probable que le message publicitaire, pertinent à la sortie du logiciel, le soit encore à cette date. De plus, cette solution ne permet que de réaliser une publicité dite large, c'est à dire à destination de l'ensemble du public, sans distinction d'âge, de sexe et d'un quelconque autre critère. Cela conduit à une publicité non efficacement exploitée car ne correspondant pas aux attentes ou centres d'intérêt du public recevant la publicité en question.
- Une seconde solution consiste en la mise en place de serveurs de contenus publicitaires, et l'insertion, dans des supports identifiés, de liens pointant vers les contenus de ces serveurs. C'est par exemple une solution très repandue dans l'univers de l'Internet. En effet, la majeure partie des publicités présentes dans les pages HTML (HyperText Markup Language) consultables sur Internet ne sont que des liens vers des serveurs spécialisés. Cette solution permet de résoudre le problème de vieillissement des contenus publicitaires, mais en revanche, ce genre de publicité n'atteint sa cible que si le serveur est accessible. Cette contrainte limite fortement les supports capables de prendre en charge l'affichage de ce genre de contenus publicitaires. Cette solution ne permet pas de résoudre le problème des publicités ciblées. En effet, les liens mis en place dans cette solution sont statiques, et ne prennent pas en considération d'éventuels paramètres concernant l'utilisateur du dispositif électronique.

L'invention propose de résoudre ces problèmes en présentant un procédé de diffusion autonome de contenu publicitaire ciblé. L'invention concerne aussi un procédé de mise a jour du contenu en question, et un dispositif permettant sa mise en oeuvre.

Plus précisément l'invention est un procédé de diffusion d'un contenu publicitaire mémorisé dans un dispositif électronique portable comprenant
- une étape de sélection d'au moins une application, dite application sélectionnée
- une étape de diffusion dudit contenu publicitaire via ladite application sélectionnée.

Dans un mode de mise en oeuvre de l'invention, ce procédé de diffusion comprend aussi une étape préalable de présélection du contenu publicitaire avant sa mémorisation dans le dispositif électronique portable, en fonction d'au moins un critère lié au porteur du dispositif électronique portable.

Dans un mode de mise en oeuvre de l'invention, l'application sélectionnée est hébergée par un second dispositif électronique connecté au dit dispositif électronique portable.

L'étape de diffusion peut consister en une localisation d'au moins un emplacement publicitaire dans l'application sélectionnée, puis une modification de l'emplacement publicitaire en question, en fonction du contenu du dispositif électronique portable. Une autre façon de réaliser l'étape de diffusion consiste en une insertion de liens publicitaires vers le contenu du dispositif électronique portable, dans des zones de l'interface homme-machine de l'application sélectionnée. Une troisième solution pour réaliser l'étape de diffusion consiste en un remplacement d'au moins une partie de l'interface homme-machine de l'application sélectionnée par des éléments publicitaires issus du dispositif électronique portable. Dans une quatrième possibilité, l'étape de diffusion consiste en un déclenchement de l'apparition de fenêtres pour afficher tout ou partie du contenu publicitaire mémorisé dans le dispositif électronique portable, au moyen des fonctionnalités de l'application sélectionnée.

L'invention est aussi un procédé de mise à jour d'un contenu publicitaire mémorisé dans un dispositif électronique portable comprenant
- une étape de sélection, consistant en la sélection d'au moins un serveur distant de contenus publicitaires
- une étape de tri, consistant en une sélection d'un sous-ensemble des contenus publicitaires du serveur distant
- une étape de rapatriement au cours de laquelle le sous-ensemble obtenu lors de l'étape de tri est copié dans une mémoire non volatile du dispositif électronique portable.

Dans un mode de mise en oeuvre de l'invention l'étape de tri se fait en fonction d'au moins un paramètre issu du dispositif électronique portable. Dans d'autres modes de réalisation, ce au moins un paramètre servant pour le tri peut être issu du second dispositif, d'une analyse comportementale du porteur du dispositif électronique portable, voire être fourni par le porteur du dispositif électronique portable.

L'invention concerne aussi un dispositif électronique portable mémorisant, dans une mémoire non volatile, un contenu publicitaire, et comportant des moyens aptes à
- sélectionner au moins une application, dite application sélectionnée,
- assurer la diffusion du contenu publicitaire via l'application sélectionnée.

Dans un mode de mise en oeuvre de l'invention, le dispositif électronique portable comprend des moyens pour trier et rapatrier un contenu publicitaire distant.

Dans un mode de mise en oeuvre de l'invention, le dispositif électronique portable comprend des moyens de communication pour sélectionner une application sélectionnée hébergée par un second dispositif électronique connecté au dispositif électronique portable

Dans différents modes de réalisation, le dispositif pourra comprendre des moyens pour localiser au moins un emplacement publicitaire dans l'application sélectionnée, modifier l'emplacement publicitaire en fonction du contenu du dispositif électronique portable. Dans un mode, il pourra comprendre des moyens pour insérer des liens publicitaires vers le contenu du dispositif électronique portable, dans des zones de l'interface homme-machine. Il pourra encore comprendre des moyens pour remplacer au moins une partie de l'interface homme-machine de l'application sélectionnée par des éléments publicitaires issus du dispositif électronique portable. Dans un autre mode de réalisation possible, il pourra comprendre des moyens pour déclencher l'apparition de fenêtres pour afficher tout ou partie du contenu publicitaire mémorisé dans le dispositif électronique portable, au moyen des fonctionnalités de l'application sélectionnée.

Nous noterons que l'interface homme-machine telle que mentionnée dans la présente invention s'entend comme une interface homme-machine (IHM) au sens logiciel du terme. En effet, l'IHM dont nous parlons peut se décrire par un ensemble sonore ou graphique d'écrans et de paramètres de saisie permettant à un logiciel de diffuser ses informations à l'utilisateur, et à l'utilisateur de fournir les informations nécessaires au fonctionnement du logiciel en question. Les IHM les plus connues sont par exemple celles de «Microsoft Windows », qui comprend une zone centrale, une bande dite « barre des tâches », qui, elle même comprend un bouton « démarrer ».

Une autre IHM est par exemple le navigateur WEB «Microsoft Internet Explorer ». L'IHM de ce logiciel a la particularité d'avoir une grande partie centrale se mettant à jour en fonction de données externes. Ces données sont en fait les pages HTML (HyperText Markup Language), ainsi le contenu des pages HTML affichées vient enrichir l'IHM du navigateur.

D'autres caractéristiques et avantages de l'invention ressortiront clairement de la description qui en est faite ci-après, à titre indicatif et nullement limitatif, en référence aux dessins annexés dans lesquels :
- La figure 1 représente un mode de réalisation dans lequel un dispositif électronique portable est capable de diffuser une information;
- La figure 2 représente un mode de réalisation dans lequel un dispositif électronique portable est capable de mettre à jour son propre contenu;
- La figure 3 représente un dispositif électronique portable apte à diffuser une information et à mettre à jour son propre contenu.

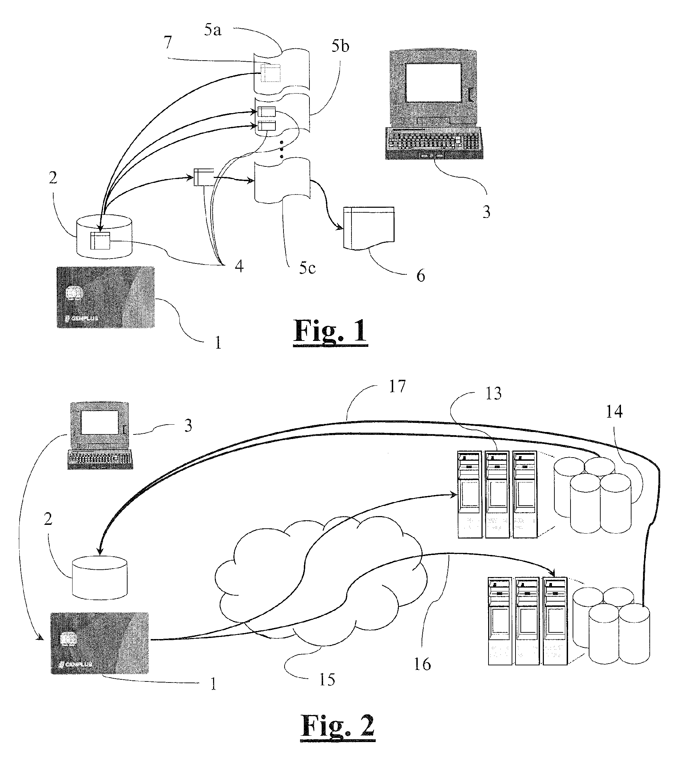

La figure 1 nous présente un dispositif électronique portable 1. Ce dispositif peut, par exemple être une carte à puce. Cette carte contient une mémoire non volatile 2, qui renferme des contenus publicitaires. Il est préférable que le contenu présent sur la carte soit sélectionné en amont, afin d'être particulièrement adapté au porteur, le porteur étant la personne à qui est dédié l'usage de la carte.

De plus, cette carte possède des moyens pour diffuser ces contenus publicitaires au travers d'applications tierces 5a, 5b, 5c. Nous entendrons par « diffusion d'une information» l'action qui consiste à faire en sorte que l'information en question et l'utilisateur soient mis en relation directe. Par exemple, l'affichage d'une fenêtre automatique (pop-up) au premier plan de l'écran est une diffusion. De même, si une application de lecture de contenu sonore est en cours d'exécution, on peut penser raisonnablement que l'utilisateur est en train d'écouter le flux de données audio. Dès lors la diffusion audio à un volume supérieur au volume du flux audio actuel, est une diffusion de l'information en question.

Dans la figure 1, la carte à puce va sélectionner une ou plusieurs des applications 5a, 5b, 5c à sa disposition, et va assurer la diffusion de tout ou partie des contenus publicitaires qu'elle possède.

La sélection de l'application qui va servir à diffuser les contenus, peut se faire par n'importe quel moyen. L'application peut être sélectionnée en fonction d'un ou de plusieurs paramètres comme sa localisation en mémoire, son nom, sa signature, ou tout autre paramètre. Cette sélection peut se faire via une application dédiée, ou bien au travers d'une application de diffusion qui va aussi être en charge de la diffusion du contenu publicitaire. La sélection de l'application et la diffusion des contenus peuvent se faire à l'initiative ou non de la carte à puce agissant en tant que serveur local de contenus.

Dans un premier exemple, la carte à puce est insérée dans un ordinateur 3. Dès lors, elle peut sélectionner une des applications 5a, 5b, 5c présentes sur l'ordinateur. Nous noterons que, selon les applications il est possible de sélectionner des applications, soit installées sur l'ordinateur, soit en cours d'exécution.

A partir de ce moment là, la carte va diffuser son contenu en fonction des moyens de diffusion à sa disposition.

Par exemple la carte sélectionne un navigateur Internet 5a, en cours d'exécution. Dès lors, la carte exécute une application de diffusion qui, dans un premier temps, analyse le contenu des pages HTML affichées par le navigateur 5a. Si ces pages contiennent des liens 7, vers des contenus publicitaires stockés sur des supports externes, alors l'application de diffusion, dans un deuxième temps, redirige les liens 7 en question vers des contenus publicitaires 4, stockés dans la mémoire non volatile 2, de la carte 1.

Si l'application de diffusion arrive à détecter des contenus publicitaires statiques, enregistrés dans les pages HTML, elle pourra remplacer le contenu par du contenu issu de la mémoire non volatile 2.

L'application de diffusion peut aussi insérer un contenu publicitaire dans une application sélectionnée qui n'est pas initialement prévue pour cet usage. Par exemple l'application sélectionnée peut être un traitement de texte 5b. L'application de diffusion analyse les informations affichées par ce traitement de texte, et en fonction de certains critères, insère des encarts publicitaires. Par exemple, si le texte affiché par l'application de traitement de texte, contient un espace blanc d'au moins quatre centimètres sur quatre centimètres, alors un encart publicitaire 4, issu de la carte, est inséré dans cet espace disponible.

Il est possible que l'application de diffusion modifie n'importe quelle partie de l'IHM de l'application sélectionnée. Par exemple il est envisageable d'insérer des slogans publicitaires dans les menus contextuels de l'application sélectionnée.

Certaines applications ont des IHM paramétrables. Par exemple Microsoft Windows XP met en oeuvre un système de « thèmes ». Cela permet de changer toute l'apparence de l'IHM, par exemple la forme des fenêtres, le fond des menus contextuels, la forme des caractères utilisés, la forme du curseur de souris, etc.

Dans ce cas là, il est aisé pour l'application de diffusion, de modifier les éléments du thème installé, par des éléments publicitaires 4 issus de la mémoire non volatile de la carte.

Une autre variante de diffusion selon l'invention consiste en l'exploitation de fonctionnalité d'affichage de l'application sélectionnée. Par exemple, si l'application sélectionnée 5c est Microsoft Windows XP, elle contient des mécanismes d'affichage automatique de fenêtres (pop-up). Il est donc possible de se servir de ces fonctionnalités pour afficher des contenus publicitaires 4. Ainsi, l'application de diffusion doit formater le contenu publicitaire 4, pour le rendre conforme aux exigences du système d'affichages automatique de fenêtres, et déclencher leur affichage 6.

Nous rappelons que dans notre exemple la carte 1 est insérée dans l'ordinateur 3. L'invention est aussi parfaitement adaptée à toute connexion entre les dispositifs 1 et 3, telles les connexions sans fil (bluetooth, wifi, ...) ou toutes autres technologies.

De la même façon, le cas représenté dans la figure 1 avec deux dispositifs 1 et 3 indépendants n'est qu'un exemple d'implémentation de l'invention. Selon un deuxième mode de réalisation de l'invention, un seul et unique dispositif, qui contient à la fois la mémoire non volatile 2 contenant les données publicitaires, et les applications 5a, 5b, 5c.

La figure 2, illustre le procédé de chargement de la mémoire non volatile 2 d'un dispositif électronique 1. Nous noterons que le contenu est rapatrié depuis un ou plusieurs serveurs 13 possédant des contenus publicitaires 14. La connexion entre la carte 1 et les serveurs 13 peut se faire au travers de n'importe quel media 15. Nous donnerons par exemple une connexion filaire, ou directe, une connexion sans fil de type WIFI, ou une connexion plus distante, par exemple via Internet.

Dans la figure 2, la carte 1 est insérée dans l'ordinateur 3, qui est connecté à Internet 15.

En fonction d'au moins un critère prédéfini, la carte prend l'initiative de mettre son contenu à jour. Ce critère peut par exemple être un critère lié à la dernière mise à jour. En effet, la carte peut décider que, après un certain laps de temps son contenu n'est plus pertinent et doit donc être renouvelé.

Via l'ordinateur 3 et le réseau 15, la carte entre donc en contact avec le ou les serveurs 13. Cette connexion est matérialisée par les flèches 16. Dès lors, la carte sélectionne un sous-ensemble des contenus 14 du ou des serveurs 13. Cette sélection de contenus peut se faire en fonction de divers paramètres. Ce ou ces paramètres peuvent venir par exemple, de la carte, de l'ordinateur, d'une analyse comportementale du porteur de la carte, ou même directement du porteur de la carte.

Ces paramètres permettent d'adapter les contenus publicitaire à télécharger au porteur de la carte. Ainsi il est particulièrement intéressant d'utiliser des critères tels que : la localisation du porteur, son âge, sa profession, ses loisirs, entre autre. Le téléchargement est illustré par les flèches 17.

Une fois le tri des contenus fait, les contenus sélectionnés sont téléchargés dans la mémoire non volatile 2 de la carte 1.

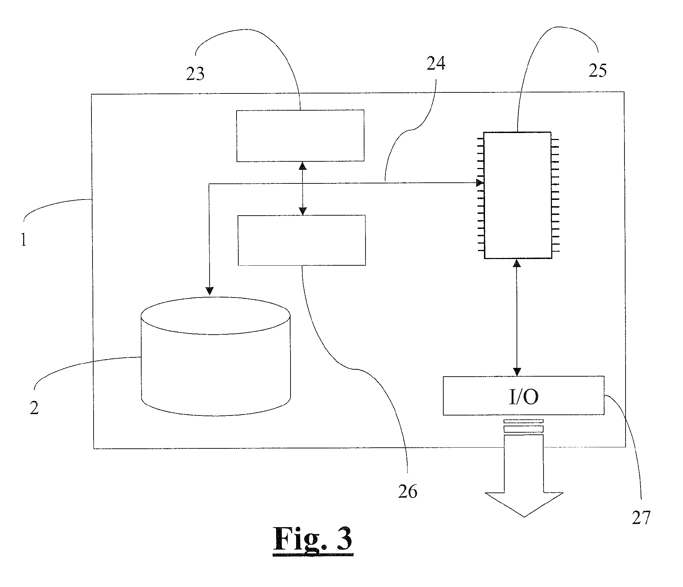

La figure 3 représente un dispositif électronique portable 1, par exemple un téléphone sans fil, possédant une mémoire non volatile 2 dans laquelle sont stockés des contenus publicitaires. Ce dispositif comporte aussi des moyens de calcul 25, et des moyens de communication 27.

Le dispositif 1 comprend également des moyens 23 pour sélectionner au moins une application tierce, d'assurer la diffusion de contenu via cette application. Dans la figure 3, le dispositif comporte aussi des moyens de mise à jour 26, pour trier et rapatrier un contenu publicitaire distant.

Dans un mode de réalisation, les moyens de diffusion 23 sont implémentés sous la forme d'un programme. Ce programme de diffusion est exécuté par un processeur 25 qui fait office de moyens de calculs, et va chercher tout ou partie du contenu publicitaire de la mémoire non volatile 22, et le diffuser via les moyens de communication 27, au travers d'une application tierce sélectionnée. Cette application peut se trouver sur un autre dispositif, connecté au dispositif 1 au travers des moyens de communication 27. Ces moyens de communication peuvent être filaires, mais l'invention est également adaptée pour un usage via des moyens de communication sans fil.

Ce programme de diffusion peut contenir différents moyens de diffusion pour, par exemple:
- localiser au moins un emplacement publicitaire dans l'application sélectionnée, puis modifier le contenu de l'emplacement publicitaire en fonction du contenu du dispositif électronique portable,
- insérer des liens publicitaires vers le contenu du dispositif électronique portable, dans des zones de l'interface homme-machine répondant à des critères prédéfinis,
- remplacer au moins une partie de l'interface homme-machine de l'application sélectionnée par des éléments publicitaires issus du dispositif électronique portable,
- en déclencher l'apparition de fenêtres pour afficher tout ou partie du contenu publicitaire mémorisé dans la mémoire 2, au moyen des fonctionnalités de l'application sélectionnée.

Les moyens optionnels de mise à jour 26 sont capables de sélectionner un contenu distant en fonction de paramètres par exemple en ajoutant une marque sur tous les contenus distants disponibles, et de trier en fonction de cette marque. Selon un exemple préféré, il peut être particulièrement intéressant d'affecter à tous les contenus publicitaires une information concernant la localisation des points de vente. Le téléphone sans fil 1 est capable de se localiser en fonction des bornes GSM sur lesquelles il se connecte. Ainsi, lors de la mise à jour du contenu de la mémoire 2 ; une stratégie consiste en une sélection uniquement des publicités qui ont un point de vente à moins de 10 km de la borne GSM à laquelle le téléphone est actuellement connecté.

Un schéma identique peut être mis en place en se basant sur l'âge ou les passions, si ces informations ont été renseignées par l'utilisateur.

Le programme 26 peut aussi analyser lui-même certains paramètres, et en déduire des paramètres. Dans notre exemple de téléphone portable, l'utilisation de certaines fonctionnalités du téléphone, comme les jeux ou certains services comme l'horoscope, permet de cibler un certain type de contenu publicitaire.

Dans le cas où les moyens de sélection d'une application sont prévus pour sélectionner une application sur un autre dispositif, il peut être prévu que le ou les paramètres de sélection de contenus soient transmis par ce dispositif distant.

## Revendications

1. Procédé de diffusion d'un contenu publicitaire mémorisé dans un dispositif électronique portable **caractérisé en ce qu'il** comprend
- une étape de sélection d'au moins une application, dite application sélectionnée,
- une étape de diffusion dudit contenu publicitaire via ladite application sélectionnée.

2. Procédé selon la revendication 1
**caractérisé en ce qu'il** comprend une étape préalable de présélection dudit contenu publicitaire avant sa mémorisation dans ledit dispositif électronique portable, en fonction d'au moins un critère lié au porteur dudit dispositif électronique portable.

3. Procédé selon la revendication 1 ou 2
**caractérisé en ce que** ladite application sélectionnée est hébergée par un second dispositif électronique connecté au dit dispositif électronique portable.

4. Procédé selon l'une quelconque des revendications 1 à 3
**caractérisé en ce que** l' étape de diffusion consiste en une localisation d'au moins un emplacement publicitaire dans l'application sélectionnée, puis une modification dudit emplacement publicitaire en fonction du contenu dudit dispositif électronique portable.

5. Procédé selon l'une quelconque des revendications 1 à 3
**caractérisé en ce que** l'étape de diffusion consiste en une insertion de liens publicitaires vers le contenu dudit dispositif électronique portable, dans des zones de l'interface homme-machine de ladite application sélectionnée.

6. Procédé selon les revendications 1 à 3
**caractérisé en ce que** l'étape de diffusion consiste en un remplacement d'au moins une partie de l'interface homme-machine de l'application sélectionnée par des éléments publicitaires issus du dispositif électronique portable.

7. Procédé selon l'une quelconque des revendications 1 à 3
**caractérisé en ce que** l'étape de diffusion consiste en un déclenchement de l'apparition de fenêtres pour afficher tout ou partie du contenu publicitaire mémorisé dans le dispositif électronique portable, au moyen des fonctionnalités de l'application sélectionnée.

8. Procédé de mise à jour d'un contenu publicitaire mémorisé dans un dispositif électronique portable **caractérisé en ce qu'il** comprend
- une étape de sélection, consistant en une sélection d'au moins un serveur distant de contenus publicitaires,
- une étape de tri, consistant en une sélection d'un sous-ensemble des contenus publicitaires dudit serveur distant
- une étape de rapatriement, au cours de laquelle ledit sous-ensemble est copié dans une mémoire non volatile dudit dispositif électronique portable.

9. Procédé selon la revendication 8
**caractérisé en ce que** l'étape de tri se fait en fonction d'au moins un paramètre issu dudit dispositif électronique portable.

10. Procédé selon la revendication 8
**caractérisé en ce que** l'étape de tri se fait en fonction d'au moins un paramètre issu dudit second dispositif électronique.

11. Procédé selon la revendication 8
**caractérisé en ce que** l'étape de tri se fait en fonction d'au moins un paramètre issu d'une analyse comportementale du porteur dudit dispositif électronique portable.

12. Procédé selon la revendication 8
**caractérisé en ce que** l'étape de tri se fait en fonction d'au moins un paramètre fourni par le porteur dudit dispositif électronique portable.

13. Dispositif électronique portable mémorisant, dans une mémoire non volatile, un contenu publicitaire,
**caractérisé en ce qu'il** comporte des moyens aptes à
- sélectionner au moins une application, dite application sélectionnée
- assurer la diffusion dudit contenu via ladite application sélectionnée.

14. Dispositif selon la revendication 13
**caractérisé en ce qu'il** comprend des moyens pour trier et rapatrier un contenu publicitaire distant.

15. Dispositif selon les revendications 13 ou 14
**caractérisé en ce qu'il** comprend des moyens de communication pour sélectionner une application hébergée par un second dispositif électronique connecté au dispositif électronique portable.

16. Dispositif selon l'une quelconque des revendications 13 à 15
**caractérisé en ce qu'il** comprend des moyens pour localiser au moins un emplacement publicitaire dans ladite application sélectionnée, modifier le contenu dudit emplacement publicitaire en fonction du contenu dudit dispositif électronique portable.

17. Dispositif selon l'une des revendications 13 à 15
**caractérisé en ce qu'il** comprend des moyens pour insérer des liens publicitaires vers le contenu du dispositif électronique portable, dans des zones de l'interface homme-machine répondant à des critères prédéfinis.

18. Dispositif selon l'une quelconque des revendications 13 à 15
**caractérisé en ce qu'il** comprend des moyens pour remplacer au moins une partie de l'interface homme-machine de l'application sélectionnée par des éléments publicitaires issus du dispositif électronique portable.

19. Dispositif selon l'une quelconque des revendications 13 à 15
**caractérisé en ce qu'il** comprend des moyens pour déclencher l'apparition de fenêtres pour afficher tout ou partie du contenu publicitaire mémorisé dans le dispositif électronique portable, au moyen des fonctionnalités de l'application sélectionnée.
